# EUROPÄISCHE PATENTANMELDUNG

(11) **EP 4 056 875 A1**
(43) Veröffentlichungstag der Anmeldung: **14.09.2022**
(21) Anmeldenummer: 21161425.0
(22) Anmeldetag: 09.03.2021
(51) Int. Cl.: F16H 57/021, F16H 57/04, F16H 57/08, F16H 1/46

(54) **ÜBERTRAGUNGSVORRICHTUNG FÜR VERSORGUNGSMITTEL ZWISCHEN ROTIERENDEN BAUTEILEN EINES PLANETENGETRIEBES**

(71) Anmelder: Flender GmbH, 46395 Bocholt (DE)
(72) Erfinder: Hitpass, Florian, 46414 Rhede (DE); Telaar, Carolin, 46419 Isselburg (DE)
(74) Vertreter: Michalski Hüttermann & Partner Patentanwälte mbB

(57) **Zusammenfassung**

Die Erfindung betrifft ein Planetengetriebe (1) mit einer Übertragungsvorrichtung (2) zum Übertragen eines Versorgungsmittels zwischen einem drehbar angeordneten ersten Getriebeteil (11) des Planetengetriebes (1) und einem drehbar angeordneten zweiten Getriebeteil (12) des Planetengetriebes (1), wobei das erste Getriebeteil (11) und das zweite Getriebeteil (12) im Betrieb des Planetengetriebes (1) eine Relativbewegung zueinander aufweisen, wobei die Übertragungsvorrichtung (2) eine Ringnut (3) an der Oberfläche (4) des ersten Getriebeteils (11) oder an der Oberfläche (5) des zweiten Getriebeteils (12) aufweist, wobei die Übertragungsvorrichtung (2) über den Umfang verteilte Bohrungen (9) in dem jeweils der Ringnut (3) gegenüberliegenden Getriebeteil (12,11) aufweist, wobei die über den Umfang verteilten Bohrungen (9) gegenüber der Ringnut (3) angeordnet sind, wobei beidseitig von der Ringnut (3) jeweils eine Dichtnut (6) im ersten Getriebeteil (11) angeordnet ist, wobei in den Dichtnuten (6) jeweils ein Dichtring (7) angeordnet ist. Die Erfindung betrifft weiter einen Antriebsstrang (20), aufweisend eine elektrische Maschine (21) und ein derartiges Planetengetriebe (1), wobei ein Rotor (22) der elektrischen Maschine (21) kraftschlüssig und/oder formschlüssig mit einer Welle des Planetengetriebes (1) verbunden ist. Ferner betrifft die Erfindung eine Windkraftanlage (30) mit einem derartigen Planetengetriebe (1) oder einem derartigen Antriebsstrang (20).

## Beschreibung

Die Erfindung betrifft ein Planetengetriebe mit einer Übertragungsvorrichtung zum Übertragen eines Versorgungsmittels. Die Erfindung betrifft weiter einen Antriebsstrang, aufweisend eine elektrische Maschine und ein derartiges Planetengetriebe. Ferner betrifft die Erfindung eine Windkraftanlage mit einem derartigen Planetengetriebe oder einem derartigen Antriebsstrang.

Bei Getrieben erfolgt die Schmiermittelverteilung und/oder Kühlmittelverteilung im Innern des Getriebes heutzutage von stationäre auf rotierende Komponenten. Durch die mittlerweile sehr kompakt aufgebauten und hochleistungsdichten Getriebe, insbesondere bei Planetengetrieben mit mehr als zwei Planetenstufen, steht für diese Verteilung nur noch beschränkt Bauraum zur Verfügung. Schmiermittel und Kühlmittel werden allgemein auch als Versorgungsmittel bezeichnet.

Die bekannten Systeme zur Verteilung von Versorgungsmitteln wie beispielsweise das doppelte Pitchrohrsystem gelangen in der Anwendung bei Planentengetrieben aufgrund derer starken Abhängigkeit vom Sonneninnendurchmesser sowie der heutigen Getriebeausführung in Form eines Hybrid Drives mit direkt angebundenen Generator an die Grenzen ihrer Leistungsfähigkeit.

Darüber hinaus ist eine Anforderung an die Verteilung von Versorgungsmitteln innerhalb eines Getriebes, dass diese möglichst leckagearm ausgeführt ist.

Der Erfindung liegt die Aufgabe zugrunde, die Übertragung und Verteilung von Versorgungsmitteln im Innern von Planetengetrieben zu verbessern.

Diese Aufgabe wird durch ein Planetengetriebe, mit einer Übertragungsvorrichtung zum Übertragen eines Versorgungsmittels zwischen einem drehbar angeordneten ersten Getriebeteil des Planetengetriebes und einem drehbar angeordneten zweiten Getriebeteil des Planetengetriebes gelöst, wobei das erste Getriebeteil und das zweite Getriebeteil im Betrieb des Planetengetriebes eine Relativbewegung zueinander aufweisen, wobei die Übertragungsvorrichtung eine Ringnut an der Oberfläche des ersten Getriebeteils oder an der Oberfläche des zweiten Getriebeteils aufweist, wobei die Übertragungsvorrichtung über den Umfang verteilte Bohrungen in dem jeweils der Ringnut gegenüberliegenden Getriebeteil aufweist, wobei die über den Umfang verteilten Bohrungen gegenüber der Ringnut angeordnet sind, wobei beidseitig von der Ringnut jeweils eine Dichtnut im ersten Getriebeteil angeordnet ist, wobei in den Dichtnuten jeweils ein Dichtring angeordnet ist. Die Aufgabe wird weiter durch einen Antriebsstrang, aufweisend eine elektrische Maschine und ein derartiges Planetengetriebe gelöst, wobei ein Rotor der elektrischen Maschine kraftschlüssig und/oder formschlüssig mit einer Welle des Planetengetriebes verbunden ist. Ferner wird die Aufgabe durch eine Windkraftanlage mit einem derartigen Planetengetriebe oder einem derartigen Antriebsstrang gelöst.

Weitere vorteilhafte Ausgestaltungen der Erfindung sind in den abhängigen Ansprüchen angegeben.

Der Erfindung liegt unter anderem die Erkenntnis zugrunde, dass die Verteilung eines Versorgungsmittel wie beispielsweise Öl, das zur Schmierung und/oder Kühlung im Innern eines Planetengetriebes dient, durch die vorgeschlagene Übertragungsvorrichtung verbessert werden kann. Diese Übertragungsvorrichtung ist im Planetengetriebe angeordnet und erstreckt sich über ein erstes Getriebeteil und ein zweites Getriebeteil, die jeweils drehbar im Innern des Planetengetriebes angeordnet sind. Dabei können diese beispielsweise sowohl beidseitig oder einseitig gelagert sein als auch in einer frei gelagerten Ausführung angeordnet sein. Die Relativbewegung zwischen dem ersten Getriebeteil und dem zweiten Getriebeteil entspricht einer Rotationsbewegung. In einem einfachen Fall kann es sich dabei um den mit der Eingangswelle und der Ausgangswelle verbundene Teil eines Planetengetriebes handeln. Dabei kann beispielsweise die Eingangswelle mit dem Planetenträger verbunden sein und die Ausgangswelle mit dem Sonnenrad, während das Hohlrad eine feststehende Komponente bildet, die beispielsweise mit dem Gehäuse verbunden ist. Ebenso ist es möglich und auch, wie in einem der folgenden Absätze näher erläutert, besonders vorteilhaft, wenn das Planetengetriebe zweistufig oder mit noch mehr Stufen ausgeführt ist, wobei die Planetenträger der jeweiligen Stufen jeweils zumindest einen Teil des ersten bzw. zweiten Getriebeteils bilden.

Allen diesen genannten Beispielen ist gemeinsam, dass das erste Getriebeteil und das zweite Getriebeteil jeweils drehbar angeordnet sind und im Betrieb des Planetengetriebes mit unterschiedlichen Drehzahlen rotieren. Mit anderen Worten weisen das erste Getriebeteil und das zweite Getriebeteil im Betrieb eine Relativbewegung zueinander auf, da sie mit unterschiedlichen Drehzahlen rotieren. Mit der vorgeschlagenen Übertragungsvorrichtung ist es dabei möglich, ein Versorgungsmittel wie beispielsweise Öl von dem rotierenden ersten Getriebeteil zum rotierenden zweiten Getriebeteil leckagearm zu übertragen. Dazu befindet sich auf dem einen Getriebeteil eine Ringnut, die sich um das Getriebeteil erstreckt. Die Ringnut ist an einer Stelle des entsprechenden Getriebeteils angeordnet, an der sich das erste Getriebeteil und das zweite Getriebeteil zumindest abschnittsweise radial überlappen. Auf der Seite des anderen Teils befinden sich dann Bohrungen über den Umfang verteilt, die zu der Ringnut fluchtend angeordnet sind. Fluchtend bedeutet in diesem Zusammenhang, dass die Bohrungen über der Ringnut liegen und das Versorgungsmittel von der Ringnut in die Bohrungen strömen kann und umgekehrt. Ein leichter Versatz der Bohrungen und der Ringnut zueinander kann dabei vorhanden sein, sofern zumindest ein Teil der Bohrung sich derart an die Ringnut anschließt, dass ein Austausch von dem Versorgungsmittel zwischen Ringnut und den Bohrungen strömungstechnisch möglich ist.

Aufgrund der Abstände zwischen dem ersten Getriebeteil und dem zweiten Getriebeteil ist mit einem Leckageanteil am Versorgungsmittel zu rechnen, dass nicht zwischen Ringnut und Bohrung strömt sondern den Zwischenraum zwischen der ersten und dem zweiten Getriebeteil nutzt, um zu entweichen. Dieses Entweichen wird als Leckage bezeichnet.

Um die Leckage zu vermeiden bzw. zu verringern, d.h. um die Übertragungsvorrichtung leckagearm auszuführen werden am ersten Getriebeteil zwei Dichtnuten angeordneten. Dabei sind diese beidseitig von der Ringnut angeordnet. Dabei kann die Ringnut ebenfalls an dem ersten Getriebeteil angeordnet sein oder alternativ an dem zweiten Getriebeteil. Dabei weisen die beiden Dichtnuten einen axialen Abstand zueinander auf, wobei die Ringnut axial betrachtet zwischen den beiden Dichtnuten angeordnet ist. In der Dichtnut ist dabei ein Dichtring angeordnet, der die oben betrachtete Leckage dadurch verhindert, dass der Dichtring den Volumenstrom des Versorgungsmittels im Bereich des Übergangs zwischen dem ersten Getriebeteil und dem zweiten Getriebeteil zweiflächig abdichtet.

Das vorgeschlagene Planetengetriebe weist eine Schmier-/ Kühlmittelübertragung von drehende auf drehende Systeme auf. Dabei weisen das erste und das zweite Getriebeteil unterschiedliche Rotationsgeschwindigkeiten auf. Ein besonderer Vorteil liegt darin, dass bei kleinen Leckagevolumenströmen eine axiale, sowie radiale Beweglichkeit zwischen den Getriebeteilen ausgeglichen werden kann.

Die Grenzfläche zwischen dem ersten Getriebeteil und dem zweiten Getriebeteil kann dabei im Bereich der Übertragungsvorrichtung parallel zu der Drehachse ausgeführt sein. Dann erfolgt die Übertragung des Versorgungsmittels radial. Ebenso ist es möglich, dass die Grenzfläche einen beliebigen Winkel zur Drehachse annimmt. Darüber hinaus ist es ebenfalls möglich, dass die Kontur zwischen den beiden Dichtnuten einen Sprung bzw. eine Stufe aufweist, so dass die Übertragung des Versorgungsmittel nicht nur eine radiale Komponente, sondern auch eine axiale Komponente aufweist. Mit einer Stufe ist auch eine rein axiale Übertragung des Versorgungsmittels möglich.

Im Vergleich zu bisherigen Lösungen, die eine Verwendung eines doppelte Pitchrohrsystem vorsahen, ist die hier vorgeschlagene Lösung auch bei unterschiedlichen Ausgestaltungen des Sonneninnendurchmessers möglich. Darüber hinaus eignet sich das vorgeschlagene Planetengetriebe auch für die Anwendung in einem Hybrid Drive, bei dem der Generator oder allgemein, eine elektrische Maschine, direkt an dem Planetengetriebe angeordnet ist.

Durch das vorgeschlagene Planetengetriebe besteht nun die Möglichkeit, das Schmier-/ Kühlmittel von der letzten Planetenstufe, beispielsweise einer dritten Planetenstufe, zu vorgeschalteten Planetenstufen, beispielsweise einer zweiten Planetenstufe, und zur davor geschalteten Planetenstufen, beispielsweise einer ersten Planetenstufe, zu transportieren. Diese Möglichkeit ermöglicht zudem eine leckagearme Schmier-/ Kühlmittelübertragung bei hohen radialen und axialen Relativbewegungen der einzelnen Getriebeteile. Die genannten Relativbewegungen können durch nachfolgende Maßnahmen verursacht werden, die dafür sorgen, dass sich die Sonne ihre Position innerhalb der Planetenstufe suchen kann:
- Kardanische Kupplung
- Freistellung/ Weglassen des Planetenträgerlagers
- Elastizitäten im System
- Elastizitäten der Sonne basierend auf ihrem Design.

Die Schmier-/ Kühlmittelübertragung zwischen den rotierenden Getriebeteilen dient nicht nur als Alternativlösung zum doppelwandigen Pitchrohr und zur Schmier-/ Kühlmittelübertragung mittels Labyrinthabdichtung, sondern weist darüber hinaus eine besonders hohe Dichtigkeit wegen der geringen Dichtspaltdurchmesser an den Dichtelementen auf. Dabei werden hohe axiale und radiale Relativbewegungen ermöglicht, die durch die kardanische Kupplung, der Freistellung oder Weglassung des Planetenträgerlagers, der Elastizitäten im System und der Elastizität der Sonne basierend auf ihrem Design entstehen können. Damit kann das vorgeschlagene Planetengetriebe auch besonders vorteilhaft und leckagearm bei diesen Betriebsbedingungen eingesetzt werden. Darüber hinaus ist eine Tauschbarkeit auf dem Turm ohne die Notwendigkeit der Demontage einzelner Getriebestufen gegeben. Das vorgeschlagene Übertragungssystem ist besonders einfach und besitzt eine geringe Komplexität durch das einfache Design und einer geringen Anzahl von Bauteilen. Dies ermöglicht einen zuverlässigen Betrieb. Das Systemdesign ist im besonderen Maße platzsparend und damit auch insbesondere für hochleistungsdichte Getriebe geeignet. Im besonderen Maße ist die Ausgestaltung des Getriebes mit mehr als zwei Stufen vorteilhaft, da im Gegensatz zum doppelwandigem Pitchrohrsystem, die Sonne der letzten Planetenstufe sehr nah an den Pitchrohraußendurchmesser geführt werden kann, wodurch die Planetenstufen mit einer größeren Übersetzung ausgeführt werden können.

Mit dem vorgeschlagenen Planetengetriebe lässt sich auf einfache Weise ein leistungsfähiger Antriebsstrang realisieren. Dabei weist das Planetengetriebe eine hohe Leistungsdichte auf. Mit anderen Worten ist das vorgeschlagene Planetengetriebe bei vorgegebener Leistung besonders klein und wird den Anforderungen an geringem Bauraum bei hoher Leistungsdichte gerecht. Daher kann es auch in einem Hybrid Drive direkt mit einer elektrischen Maschine, insbesondere einem Generator gekoppelt werden. Dabei bilden Getriebe und elektrische Maschine als Antriebsstrang eine bauliche Einheit.

Diese bauliche Einheit bzw. dieser Antriebsstrang kann aufgrund seiner kompakten Bauweise und seines geringen Gewichts besonders vorteilhaft in einer Windkraftanlage zum Einsatz kommen. Durch die Anordnung in der Gondel bringt ein geringes Gewicht viele Vorteile bei der Konstruktion von Turm und Gondel der Windkraftanlage.

Bei einer vorteilhaften Ausgestaltung der Erfindung ist das erste Getriebeteil zumindest im Bereich der Übertragungsvorrichtung gegenüber des zweiten Getriebeteils außen angeordnet. Die Dichtringe sitzen auf dem zweiten Getriebeteil, in diesem Fall das innere Getriebeteil, und rotieren mit der Geschwindigkeit des zweiten Getriebeteils. Die Dichtringe sind also innenanliegend ausgebildet. Dafür bietet sich als Material ein Kunststoff an. Durch den Druck des Versorgungsmittels, beispielsweise des Öls, am Übergang zwischen der Ringnut und den Bohrungen drückt das Versorgungsmittel die Dichtringe jeweils an den Rand der Dichtnut und dichtet diese damit ab.

Um die Dichtringe auf dem zweiten Getriebeteil, also innerem Getriebeteil, montieren zu können, ist es vorteilhaft, wenn die Ringnut im ersten Getriebeteil, also dem äußeren Getriebeteil angeordnet ist und die über den Umfang verteilten Bohrungen im zweiten Getriebeteil angeordnet sind.

Besonders vorteilhaft ist die Anwendung dieser Ausgestaltungsform bei einem mehrstufigen Getriebe. Zwischen dem Innendurchmesser der vorhergehenden Stufe und dem der nachfolgenden Stufe des mehrstufigen Planetengetriebes werden die Dichtringe aus Kunststoff eingesetzt. Die Dichtringe werden auch als Bufferringe bezeichnet. Dafür ist eine zentrierte Buchse an der langen Nabe des nachgehenden Planetenträgers einzusetzen, die die Lauffläche der Bufferringe bildet. Alternativ kann die Kontur auch über eine Verlängerung der langen Nabe des Planetenträgers realisiert werden. In dem vorhergehenden Planetenträger werden die Bufferringe in die vorhergesehenen Dichtnuten eingesetzt. Die Kontur der Nuten kann auch über eine zusätzliche Buchse abgebildet werden.

Zwischen der Buchse und der Laufbahn der Bufferringe ist ein Spalt zu wählen, der die radiale Verlagerung sowie die Verkippung des Gesamtsystems in der Verbindung ausgleichen kann. Das System ist in vorteilhafter Weise so ausgebildet, dass auch axiale Verlagerungen kompensiert werden können.

Zudem muss die Tiefe der Dichtnut des Bufferrings entsprechend des Spaltes gewählt werden, um ein Anlaufen im Nutgrund zu verhindern.

Bei einer weiteren vorteilhaften Ausgestaltung der Erfindung ist das erste Getriebeteil zumindest im Bereich der Übertragungsvorrichtung gegenüber des zweiten Getriebeteils innen angeordnet. Die Dichtringe sind an der Innenseite des zweiten Getriebeteils, also des äußeren Getriebeteils, angeordnet und rotieren mit der Geschwindigkeit des zweiten Getriebeteils. Die Dichtringe sind also außenanliegend ausgebildet. Dafür bieten sich als Dichtringe Kolbenringe an. Alternativ sind auch außenanliegende Dichtringe aus Kunststoff und alternative Materialien anwendbar. Durch den Druck des Versorgungsmittels, beispielsweise des Öls, am Übergang zwischen der Ringnut und den Bohrungen drückt das Versorgungsmittel die Dichtringe jeweils an den Rand der Dichtnut und dichtet diese damit ab.

Um die Dichtringe auf dem zweiten Getriebeteil, dem äußeren Getriebeteil, montieren zu können, ist es vorteilhaft, wenn die Ringnut im ersten Getriebeteil, dem inneren Getriebeteil, angeordnet ist und die über den Umfang verteilten Bohrungen im zweiten Getriebeteil angeordnet sind.

Besonders vorteilhaft ist die Anwendung dieser Ausgestaltungsform bei einem mehrstufigen Getriebe. Zwischen dem Innendurchmesser, der Ringförmigen Kontur der vorhergehenden Stufe des mehrstufigen Getriebes und dem der nachfolgenden Stufe werden Kolbenringe, beispielsweise in Anlehnung an die DIN 34 118, DIN 34 110 oder ähnliche Normen zu Kolbenringen, eingesetzt. Dafür ist eine zentrierte Buchse an der langen Nabe des nachfolgenden Planetenträgers einzusetzen, in der die Kolbenringe in die vorhergesehenen Dichtnuten eingesetzt werden. Alternativ kann die Kontur auch über eine Verlängerung der langen Nabe des Planetenträgers realisiert werden. Der vorhergehende Planetenträger bildet die Laufbahn der Kolbenringe, die einerseits in dem Planetenträger oder über eine Buchse vorgesehen werden können.

Zwischen der Buchse und der Laufbahn der Kolbenringe ist ein Spalt zu wählen, der die radiale Verlagerung sowie die Verkippung des Gesamtsystems in der Verbindung ausgleichen kann. Das System ist in vorteilhafter Weise so ausgebildet, dass auch axiale Verlagerungen kompensiert werden können. Zudem muss die Tiefe der Dichtnut des Kolbenrings entsprechend des Spaltes gewählt werden, um ein Anlaufen des Kolbenrings im Nutgrund zu verhindern.

Kolbenringe sind beispielsweise in Anlehnung an die DIN 34 118, DIN 34 110 oder ähnliche Normen zu Kolbenringen in Durchmesserbereichen von 10-1200mm verfügbar. Daher ist die vorgeschlagene Übertragungsvorrichtung in einem Planetengetriebe in verschieden Größen und damit in verschiedenen Leistungsklassen umsetzbar.

Bei einer weiteren vorteilhaften Ausgestaltung der Erfindung sind die Dichtnuten an der Oberfläche des ersten Getriebeteils angeordnet sind. Dabei befinden sich die Dichtnuten an der Oberfläche des ersten Getriebeteils und dichten die Übertragungsvorrichtung am Übergang zwischen erstem Getriebeteil und zweitem Getriebeteil ab. Diese Ausgestaltung weist nur wenige Komponenten auf, so dass diese einfach realisierbar ist und die Zuverlässigkeit des Getriebes erhöht, da ein Schaden an der Dichtung aufgrund der geringen Komplexität sehr unwahrscheinlich ist.

Bei einer weiteren vorteilhaften Ausgestaltung der Erfindung weist das Planetengetriebe eine erste Getriebestufe und eine zweite Getriebestufe auf, wobei der Planetenträger der ersten Getriebestufe zumindest einen Teil des ersten Getriebeteil bildet, wobei der Planetenträger der zweiten Getriebestufe zumindest einen Teil des zweiten Getriebeteil bildet. Bei mehrstufigen Getrieben, insbesondere mehrstufigen Planetengetrieben kann es zu radialen Verlagerungen und Verkippungen der einzelnen Getriebestufen können. Diese müssen bei der Ausgestaltung der Versorgungsmittelverteilung im Innern des Getriebes berücksichtigt werden. Das vorgeschlagene Planetengetriebe kann besonders Große Abweichungen zwischen den Getriebestufen ausgleichen, ohne dass unzureichend hohe Leckagen im Versorgungsmittelkreislauf entstehen. Daher eignet sich das vorgeschlagene Planetengetriebe im Besonderen für die Ausgestaltung als mehrstufiges Getriebe. Wobei es sich ganz besonders für die Ausgestaltung mit mehr als zwei Stufen eignet.

Bei einer weiteren vorteilhaften Ausgestaltung der Erfindung werden das erste Getriebeteil und das zweite Getriebeteil jeweils zumindest teilweise durch ein Gussteil gebildet. Gussteile sind nur mit relativ großen Fertigungstoleranzen herstellbar, sind jedoch sehr stabil und können hohe Kräfte und Drehmomente übertragen. Durch das vorgeschlagene Planetengetriebe können selbst größere Verlagerungen und Verkippungen ausgeglichen werden, so dass durch die Ausgestaltung der Getriebeteile als Gussteile ein besonders leistungsfähiges Planetengetriebe herstellbar ist. Darüber hinaus kann die Versorgung mit Schmier- und Kühlmitteln zuverlässig sichergestellt werden. Dies wirkt sich ebenfalls positiv auf die übertragbare Leistung des Planetengetriebes aus. Somit lässt sich durch die Ausgestaltung der Getriebeteile als Gussteile ein besonders leistungsfähiges Planetengetriebe mit geringen Abmessungen und geringem Gewicht herstellen.

Im Folgenden wird die Erfindung anhand der in den Figuren dargestellten Ausführungsbeispiele näher beschreiben und erläutert. Es zeigen:
- FIG 1 und FIG 2: Ausgestaltungen für eine Übertragungsvorrichtung für Versorgungsmittel eines Planetengetriebes,
- FIG 3: einen Antriebsstrang und
- FIG 4: eine Windkraftanlage.

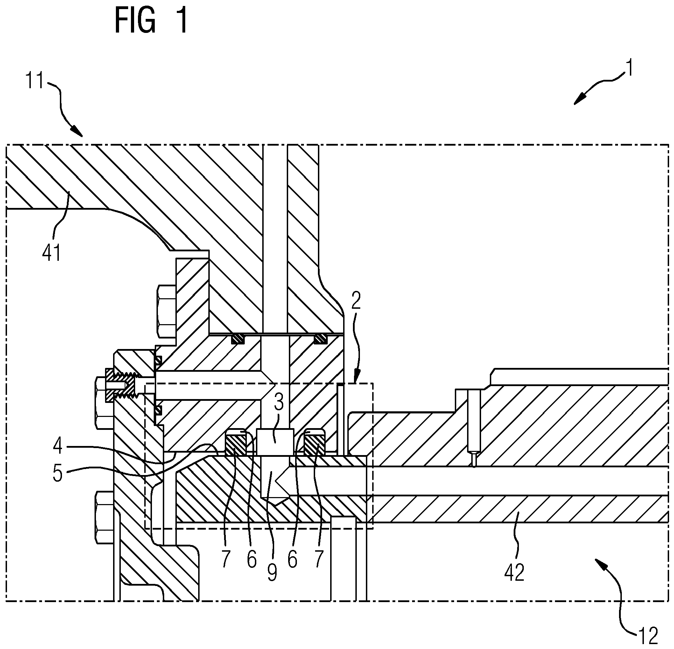

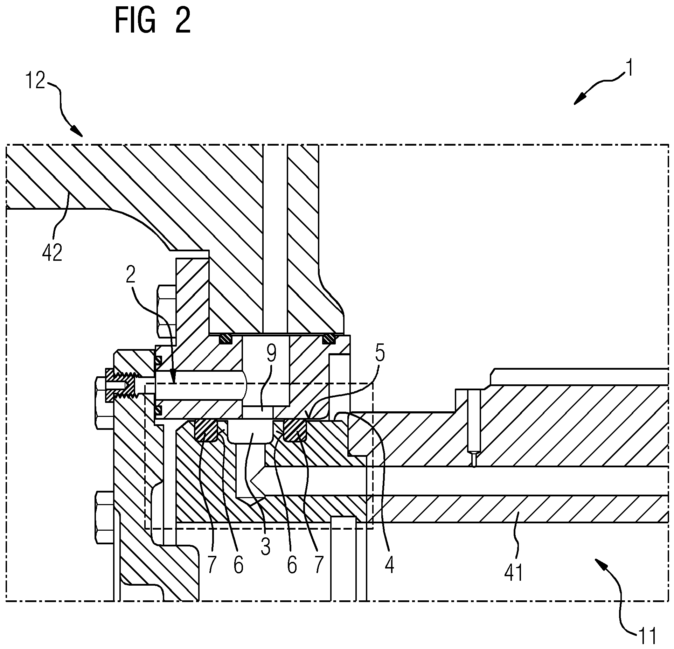

Die Figuren 1 und 2 zeigen verschiedene Ausgestaltungen einer Übertragungsvorrichtung 2 in einem Planetengetriebe 1.

Die FIG 1 zeigt dabei einen Ausschnitt des Planetengetriebes 1, in dem die Übertragungsvorrichtung 2 angeordnet ist. In einem Planetengetriebe 1 können mehrere Übertragungsvorrichtungen 2 angeordnet sein. Die Übertragungsvorrichtung 2 dient zum Übertragen eines Versorgungsmittels zwischen einem ersten Getriebeteil 11 und einem zweiten Getriebeteil 12. Dabei bilden in diesem Ausführungsbeispiel das erste Getriebeteil 11 das äußere Getriebeteil und das zweite Getriebeteil 12 das innere Getriebeteil. Diese beiden Getriebeteile 11, 12 sind drehbar im Planetengetriebe 1 angeordnet und weisen im Betrieb unterschiedliche Drehzahlen auf, so dass diese beiden Getriebeteile 11, 12 eine Relativbewegung zueinander ausführen. Dabei weist das erste Getriebeteil 11, das in diesem Ausführungsbeispiel das äußere Teil darstellt, Dichtnuten 6 auf, die an einer Oberfläche 4 des ersten Getriebeteils 11 angeordnet sind. Zwischen den Dichtnuten 6 befindet sich eine Ringnut 3, so dass die Dichtnut 6 beidseitig und axial beabstandet zu der Ringnut 3 angeordnet sind. Auf der gegenüberliegenden Seite der Oberfläche 4 des ersten Getriebeteils befindet sich eine Oberfläche 5 des zweiten Getriebeteils 12. Vorzugsweise fluchtend zu der Ringnut 3 sind im zweiten Getriebeteil 12 über den Umfang verteilt Bohrungen 9 angeordnet. Zwischen der Ringnut 3 und den Bohrungen 9 kann das Versorgungsmittel zwischen dem ersten Getriebeteil 11 und dem zweiten Getriebeteil 12 ausgetauscht werden. Da aus verschiedenen Gründen wie beispielsweise einer radialen Verlagerung oder Verkippungen der Abstand an den Oberflächen 4, 5 zwischen den beiden Getriebeteilen 11, 12 groß werden kann, müssen Maßnahmen gegen eine Leckage der Versorgungsmittel in diesem Bereich getroffen werden. Dazu dient die im ersten Getriebeteil 11 angeordnete Dichtnut 6. In der Dichtnut 6 ist jeweils ein Dichtring 7 angeordnet der an dem zweiten Getriebeteil 12 befestigt ist und mit der Geschwindigkeit des zweiten Getriebeteils 12 rotiert. Der Druck des Versorgungsmittels, insbesondere des Öls im Bereich der Ringnut 3 und der Bohrungen 9 führt zum Anliegen und Abdichten des Dichtrings 7 an den Rand der Dichtnut 6. Damit wirkt der Dichtring 7 an zwei Seiten abdichtend.

Bei der Ausbildung des Planetengetriebes 1 als mehrstufiges Getriebe kann ein erster Planetenträger 41 der ersten Getriebestufe den ersten Getriebeteil 11 oder einen Teil des ersten Getriebeteils 11 bilden. Ebenso kann ein zweiter Planetenträger 42 der zweiten Getriebestufe den zweiten Getriebeteil 12 oder einen Teil des zweiten Getriebeteils 12 bilden.

Die FIG 2 zeigt ein weiteres Ausführungsbeispiel eines Planetengetriebes 1. Dabei ist im Gegensatz zum Ausführungsbeispiel der FIG 1 das erste Getriebeteil 11 innen gegenüber dem zweiten Getriebeteil 12 angeordnet. Zur Vermeidung von Wiederholungen wird auf die Beschreibung zur FIG 1 sowie auf die dort eingeführten Bezugszeichen verwiesen. Da die Dichtnuten 6 sich nun in dem inneren Getriebeteil befinden, ist der Dichtring 7 nun außen angeordnet und rotiert mit der Drehzahl des äußeren, zweiten Getriebeteils 12. Durch den außen befestigten Dichtring 7 kann als Dichtring 7 ein Kolbenring verwendet werden. Das Übertragen des Versorgungsmittel mittels Ringnut 3 und Bohrungen 9 sowie die Abdichtung durch den Dichtring 7 in der Dichtnut 6 erfolgt analog zu den Beschreibungen der FIG 1.

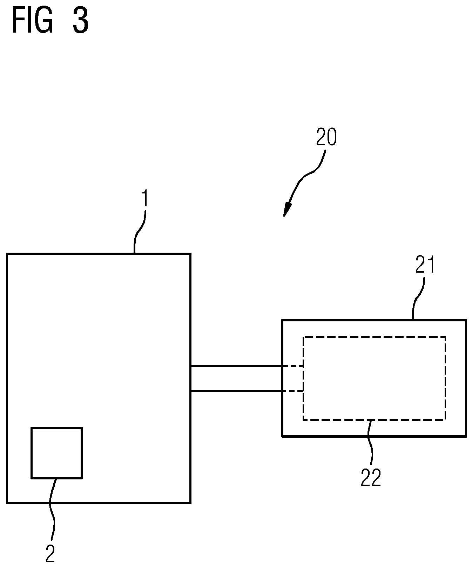

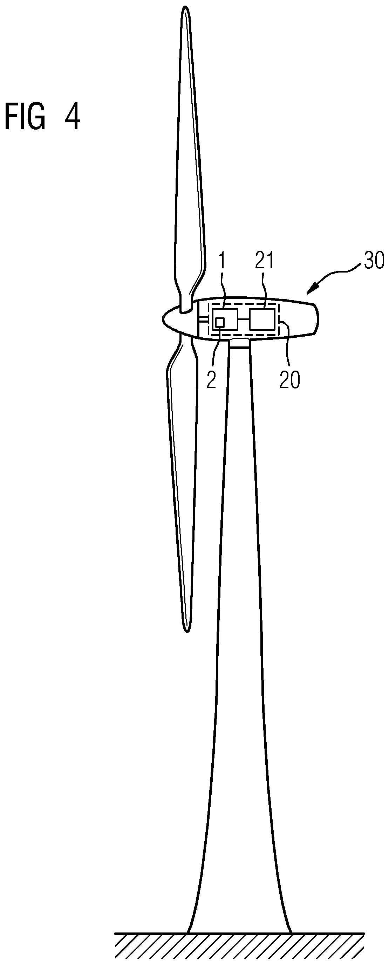

Die FIG 3 zeigt einen Antriebsstrang 20. Bei dem Antriebsstrang 20 ist das Planetengetriebe 1 mit einer elektrischen Maschine 21 gekoppelt, bzw. verbunden. Dabei ist ein Rotor 22 mit einer Welle des Planetengetriebes 1 verbunden. Das Planetengetriebe 1 weist dabei eine Übertragungsvorrichtung 2 auf. Optional können die elektrische Maschine 21 und das Planetengetriebe 1 eine bauliche Einheit, ein sogenanntes Hybride Drive, bilden. Aufgrund der Vorteile des Planetengetriebes 1 kann ein besonders kompakter Antriebsstrang 20 realisiert werden. Dieser hat in Bezug auf seine Leistungsfähigkeit geringe Abmessungen und ein geringes Gewicht. Damit eignet sich dieser Antriebsstrang 20 oder auch nur das Planetengetriebe 1 für die Anwendung in einer Windkraftanlage 30, wie in FIG 4 gezeigt. Dabei stellt die elektrische Maschine 21 einen Windkraftgenerator, also einen Generator für eine Windkraftanwendung, dar. Durch das geringe Gewicht und den geringeren Abmessungen ist eine Anordnung des Planetengetriebes 1 oder des Antriebsstrangs 20 in einer Gondel der Windkraftanlage 30 vorteilhaft, da dies sich positiv auf die Konstruktion der Gondel und eines Turms der Windkraftanlage 30 auswirkt.

Zusammenfassend betrifft die Erfindung ein Planetengetriebe mit einer Übertragungsvorrichtung zum Übertragen eines Versorgungsmittels zwischen einem drehbar angeordneten ersten Getriebeteil des Planetengetriebes und einem drehbar angeordneten zweiten Getriebeteil des Planetengetriebes, wobei das erste Getriebeteil und das zweite Getriebeteil im Betrieb des Planetengetriebes eine Relativbewegung zueinander aufweisen, wobei die Übertragungsvorrichtung eine Ringnut an der Oberfläche des ersten Getriebeteils oder an der Oberfläche des zweiten Getriebeteils aufweist, wobei die Übertragungsvorrichtung über den Umfang verteilte Bohrungen in dem jeweils der Ringnut gegenüberliegenden Getriebeteil aufweist, wobei die über den Umfang verteilten Bohrungen gegenüber der Ringnut angeordnet sind, wobei beidseitig von der Ringnut jeweils eine Dichtnut im ersten Getriebeteil angeordnet ist, wobei in den Dichtnuten jeweils ein Dichtring angeordnet ist. Die Erfindung betrifft weiter einen Antriebsstrang, aufweisend eine elektrische Maschine und ein derartiges Planetengetriebe, wobei ein Rotor der elektrischen Maschine kraftschlüssig und/ oder formschlüssig mit einer Welle des Planetengetriebes verbunden ist. Ferner betrifft die Erfindung eine Windkraftanlage mit einem derartigen Planetengetriebe oder einem derartigen Antriebsstrang.

## Patentansprüche

1. Planetengetriebe (1) mit einer Übertragungsvorrichtung (2) zum Übertragen eines Versorgungsmittels zwischen einem drehbar angeordneten ersten Getriebeteil (11) des Planetengetriebes (1) und einem drehbar angeordneten zweiten Getriebeteil (12) des Planetengetriebes (1), wobei das erste Getriebeteil (11) und das zweite Getriebeteil (12) im Betrieb des Planetengetriebes (1) eine Relativbewegung zueinander aufweisen, wobei die Übertragungsvorrichtung (2) eine Ringnut (3) an der Oberfläche (4) des ersten Getriebeteils (11) oder an der Oberfläche (5) des zweiten Getriebeteils (12) aufweist, wobei die Übertragungsvorrichtung (2) über den Umfang verteilte Bohrungen (9) in dem jeweils der Ringnut (3) gegenüberliegenden Getriebeteil (12,11) aufweist, wobei die über den Umfang verteilten Bohrungen (9) gegenüber der Ringnut (3) angeordnet sind, wobei beidseitig von der Ringnut (3) jeweils eine Dichtnut (6) im ersten Getriebeteil (11) angeordnet ist, wobei in den Dichtnuten (6) jeweils ein Dichtring (7) angeordnet ist.

2. Planetengetriebe (1) nach Anspruch 1, wobei das erste Getriebeteil (11) zumindest im Bereich der Übertragungsvorrichtung (2) gegenüber des zweiten Getriebeteils (12) außen angeordnet ist.

3. Planetengetriebe (1) nach Anspruch 1, wobei das erste Getriebeteil (11) zumindest im Bereich der Übertragungsvorrichtung (2) gegenüber des zweiten Getriebeteils (12) innen angeordnet ist.

4. Planetengetriebe (1) nach einem der Ansprüche 1 bis 3, wobei die Dichtnuten (6) an der Oberfläche (4) des ersten Getriebeteils (11) angeordnet sind.

5. Planetengetriebe (1) nach einem der Ansprüche 1 bis 4, wobei zwischen dem ersten Getriebeteil (11) und dem zweiten Getriebeteil (12) eine schwimmende Buchse angeordnet ist, wobei die schwimmende Buchse (8) derart im Planetengetriebe (1) angeordnet ist, dass die schwimmende Buchse (8) gegenüber dem ersten Getriebeteil (11) ruht.

6. Planetengetriebe (1) nach einem der Ansprüche 1 bis 5, wobei das Planetengetriebe (1) eine erste Getriebestufe und eine zweite Getriebestufe aufweist, wobei der Planetenträger der ersten Getriebestufe zumindest einen Teil des ersten Getriebeteil (11) bildet, wobei der Planetenträger der zweiten Getriebestufe zumindest einen Teil des zweiten Getriebeteil (12) bildet.

7. Planetengetriebe (1) nach einem der Ansprüche 1 bis 6, wobei das erste Getriebeteil (11) und das zweite Getriebeteil (12) jeweils zumindest teilweise durch ein Gussteil gebildet werden.

8. Antriebsstrang (20), aufweisend eine elektrische Maschine (21) und ein Planetengetriebe (1) nach einem der Ansprüche 1 bis 7, wobei ein Rotor (22) der elektrischen Maschine (21) kraftschlüssig und/oder formschlüssig mit einer Welle des Planetengetriebes (1) verbunden ist.

9. Windkraftanlage (30) mit einem Planetengetriebe (1) nach einem der Ansprüche 1 bis 7 oder einem Antriebsstrang (20) nach Anspruch 8.
